(19) Europäisches Patentamt
European Patent Office
Office européen des brevets

(11) **EP 4 742 567 A1**

(12) **EUROPEAN PATENT APPLICATION**
published in accordance with Art. 153(4) EPC

(43) Date of publication:
**13.05.2026 Bulletin 2026/20**

(21) Application number: **24853414.1**

(22) Date of filing: **04.07.2024**

(51) International Patent Classification (IPC):
*H04L 1/00* (2006.01)

(52) Cooperative Patent Classification (CPC):
**H04L 1/00; H04L 25/03**

(86) International application number:
**PCT/CN2024/103544**

(87) International publication number:
**WO 2025/035999 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.08.2023 CN 202311035417**

(71) Applicant: **Huawei Technologies Co., Ltd.
Shenzhen, Guangdong 518129 (CN)**

(72) Inventors:
• **XIN, Haiyun**
  **Shenzhen, Guangdong 518129 (CN)**
• **YI, Pin**
  **Shenzhen, Guangdong 518129 (CN)**
• **MA, Huixiao**
  **Shenzhen, Guangdong 518129 (CN)**
• **LU, Yao**
  **Shenzhen, Guangdong 518129 (CN)**
• **LI, Zhiwei**
  **Shenzhen, Guangdong 518129 (CN)**
• **TIAN, Yu**
  **Shenzhen, Guangdong 518129 (CN)**
• **GAO, Shimin**
  **Shenzhen, Guangdong 518129 (CN)**
• **TAN, Jiansi**
  **Shenzhen, Guangdong 518129 (CN)**

(74) Representative: **Gill Jennings & Every LLP
The Broadgate Tower
20 Primrose Street
London EC2A 2ES (GB)**

(54) **SIGNAL PROCESSING METHOD AND RELATED APPARATUS**

(57) Embodiments of this application disclose a signal processing method and a related apparatus. The signal processing method may be applied to a communication scenario. A transmitter adjusts a power spectrum of a to-be-sent signal based on a target frequency of interference or noise. Specifically, the transmitter inverts polarities of some symbols in the to-be-sent signal based on the target frequency, so that power of a to-be-sent signal at the target frequency is suppressed, thereby helping resist impact of the interference or the noise on a channel on transmission performance. The transmitter may flexibly adjust the power spectrum of the to-be-sent signal based on an actual frequency of the interference or the noise, so that the to-be-sent signal does not overlap the interference or the noise in frequency, and a receiver can effectively filter out the interference or the noise and cause no impairment to the signal from the transmitter. The transmitter further sends identification information to the receiver, so that the receiver performs inverse transformation of power spectrum adjustment on a received signal based on the identification information, to restore the original signal that is before the transmitter performs power spectrum adjustment.

FIG. 2

# EP 4 742 567 A1

**Description**

This application claims priority to Chinese Patent Application No. 202311035417.7, filed with the China National Intellectual Property Administration on August 15, 2023 and entitled "SIGNAL PROCESSING METHOD AND RELATED APPARATUS", which is incorporated herein by reference in its entirety.

## TECHNICAL FIELD

Embodiments of this application relate to the communication field, and in particular, to a signal processing method and a related apparatus.

## BACKGROUND

In actual deployment of a communication system, an impairment effect from a channel causes signal quality degradation, and a bit error rate of signals significantly increases. In this case, transmission performance of the communication system is limited.

When frequencies of some interference or noise in the communication system overlap a signal frequency, a filter at a receiver cannot filter out the interference or noise because a frequency range of the filter is consistent with a signal frequency range. In this case, the interference or noise in a signal band deteriorates overall signal performance.

## SUMMARY

Embodiments of this application provide a signal processing method and a related apparatus. A transmitter inverts polarities of some symbols in a to-be-sent signal based on a target frequency, to implement power spectrum adjustment, so that power of a to-be-sent signal at the target frequency is suppressed, thereby helping resist impact of interference or noise on a channel on transmission performance.

According to a first aspect, an embodiment of this application provides a signal processing method. The method is applied to a transmitter. Specifically, the transmitter obtains a first modulated signal, where the first modulated signal includes M symbol sets, each symbol set includes N symbols, and both M and N are integers greater than 1. For example, N is usually an integer multiple of 2. It should be understood that each symbol set may also be referred to as a symbol block (block), and each symbol in the block may include a plurality of bits. Then, the transmitter inverts a polarity of at least one symbol in at least one symbol set in the first modulated signal to obtain a second modulated signal including $M \times N$ symbols. Power of the second modulated signal at a target frequency is less than power of the first modulated signal at the target frequency. Next, the transmitter generates identification information, where the identification information indicates polarity inversion statuses of the symbols in each symbol set. Further, the transmitter sends the second modulated signal and the identification information.

In this implementation, the transmitter adjusts a power spectrum of a to-be-sent signal based on a target frequency of interference or noise. Specifically, the transmitter inverts polarities of some symbols in the to-be-sent signal based on the target frequency, to implement power spectrum adjustment, so that power of a to-be-sent signal at the target frequency is suppressed, thereby helping resist impact of the interference or the noise on a channel on transmission performance. In other words, the transmitter may flexibly adjust the power spectrum of the to-be-sent signal based on an actual frequency of the interference or the noise, so that the to-be-sent signal does not overlap the interference or the noise in frequency, and a receiver can effectively filter out the interference or the noise and cause no impairment to the signal from the transmitter. In addition, the transmitter further sends the identification information to the receiver, so that the receiver performs inverse transformation of power spectrum adjustment on a received signal based on the identification information, to restore the original signal that is before the transmitter performs power spectrum adjustment.

In some possible implementations, inverting the polarity of the at least one symbol in the at least one symbol set includes: inverting polarities of all symbols in the at least one symbol set. In other words, the inversion manner used herein is to invert the polarities of all the symbols in the symbol set as a whole. This implementation is simpler.

In some possible implementations, inverting the polarity of the at least one symbol in the at least one symbol set includes: if polarities of all symbols in a $q^{th}$ symbol set remain unchanged, determining a frequency characteristic parameter corresponding to each of a $0^{th}$ symbol set to the $q^{th}$ symbol set, and performing summation on frequency characteristic parameters corresponding to all of the $0^{th}$ symbol set to the $q^{th}$ symbol set and performing a modulo operation, to obtain a first summation value, where $0<q\leq M-1$, and the frequency characteristic parameter corresponding to each symbol set is related to the target frequency; or if polarities of all symbols in a $q^{th}$ symbol set are inverted, determining, based on the target frequency, a frequency characteristic parameter corresponding to each of a $0^{th}$ symbol set to the $q^{th}$ symbol set, and performing summation on frequency characteristic parameters corresponding to all of the $0^{th}$ symbol set to the $q^{th}$ symbol set and performing a modulo operation, to obtain a second summation value; and if a square of the first summation value is greater than a square of the second summation value, inverting the polarities of all the symbols in the q<sup>th</sup> symbol set; or if a square of the first summation value is less than or equal to a square of the second summation value, keeping the polarities of all the symbols in the q<sup>th</sup> symbol set unchanged. This implementation provides a specific method for determining whether polarity inversion needs to be performed on the symbol set. This helps extend to a scenario of suppressing power at any frequency position, and is applicable to more scenarios.

In some possible implementations, in a scenario in which the target frequency is 0, a frequency characteristic parameter corresponding to the symbol set is a sum of values of all symbols in the symbol set. It should be understood that, when the values of the symbols are complex numbers, the sum of the values of the symbols is a result obtained through real part addition and imaginary part addition of the complex numbers. In other words, when the interference occurs in a low-frequency scenario, it is easier to calculate the frequency characteristic parameter corresponding to the symbol set, to suppress power of a signal at a low-frequency position through power spectrum shaping. This helps cope with a common low-frequency loss and interference, for example, signal impairment occurs near a direct current frequency.

In some possible implementations, the values of all the symbols in the symbol set are real numbers, and inverting the polarity of the at least one symbol in the at least one symbol set includes: obtaining a third summation value obtained by performing summation on values of all symbols in a 0<sup>th</sup> symbol set to a (q-1)<sup>th</sup> symbol set, and obtaining a fourth summation value obtained by performing summation on values of all symbols in a q<sup>th</sup> symbol set; and if polarities of the third summation value and the fourth summation value are the same, inverting polarities of all the symbols in the q<sup>th</sup> symbol set; or if polarities of the third summation value and the fourth summation value are different, keeping polarities of all the symbols in the q<sup>th</sup> symbol set unchanged. It should be understood that, for the interference occurring in the low-frequency scenario, this implementation provides a specific method for determining whether polarity inversion needs to be performed on the symbol set. This implementation is simpler.

In some possible implementations, the target frequency includes a first frequency and a second frequency, a first frequency characteristic parameter corresponding to each symbol set is related to the first frequency, and a second frequency characteristic parameter corresponding to each symbol set is related to the second frequency. Inverting the polarity of the at least one symbol in the at least one symbol set includes: if polarities of all symbols in a q<sup>th</sup> symbol set remain unchanged, determining a first frequency characteristic parameter corresponding to each of a 0<sup>th</sup> symbol set to the q<sup>th</sup> symbol set, performing summation on first frequency characteristic parameters corresponding to all of the 0<sup>th</sup> symbol set to the q<sup>th</sup> symbol set and performing a modulo operation, to obtain a fifth summation value, determining a second frequency characteristic parameter corresponding to each of the 0<sup>th</sup> symbol set to the q<sup>th</sup> symbol set, and performing summation on second frequency characteristic parameters corresponding to all of the 0<sup>th</sup> symbol set to the q<sup>th</sup> symbol set and performing a modulo operation, to obtain a sixth summation value; or if polarities of all symbols in a q<sup>th</sup> symbol set are inverted, determining a first frequency characteristic parameter corresponding to each of a 0<sup>th</sup> symbol set to the q<sup>th</sup> symbol set, performing summation on first frequency characteristic parameters corresponding to all of the 0<sup>th</sup> symbol set to the q<sup>th</sup> symbol set and performing a modulo operation, to obtain a seventh summation value, determining a second frequency characteristic parameter corresponding to each of the 0<sup>th</sup> symbol set to the q<sup>th</sup> symbol set, and performing summation on second frequency characteristic parameters corresponding to all of the 0<sup>th</sup> symbol set to the q<sup>th</sup> symbol set and performing a modulo operation, to obtain an eighth summation value; and if a sum of a square of the fifth summation value and a square of the sixth summation value is greater than a sum of a square of the seventh summation value and a square of the eighth summation value, inverting the polarities of all the symbols in the q<sup>th</sup> symbol set; or if a sum of a square of the fifth summation value and a square of the sixth summation value is less than or equal to a sum of a square of the seventh summation value and a square of the eighth summation value, keeping the polarities of all the symbols in the q<sup>th</sup> symbol set unchanged.

In this implementation, the transmitter may further suppress power spectra at a plurality of frequency positions through power spectrum shaping, to cope with a scenario in which interference of a plurality of different frequencies exists in practice.

In some possible implementations, the frequency characteristic parameter corresponding to the symbol set is represented as:

$$\sum_{s_j \in D_q} s_j \times e^{-i \times 2\pi \times \frac{f}{Baudrate} \times (j + (q-1) \times (N+P))}$$

S represents a symbol in the symbol set, i represents an imaginary part of a complex number, j represents a sequence number of the symbol in the symbol set, f represents the target frequency, Baudrate represents a baud rate for transmitting the second modulated signal and the identification information, q represents a sequence number of the symbol set, N represents a quantity of symbols in the symbol set, P represents a length of identification information corresponding to the symbol set, and Dq represents all the symbols in the q<sup>th</sup> symbol set.

In some possible implementations, the identification information includes M sub-identifiers that are in one-to-one correspondence with the M symbol sets, a first value of the sub-identifier indicates that polarities of all symbols in a corresponding symbol set are inverted, and a second value of the sub-identifier indicates that the polarities of all the symbols in the corresponding symbol set remain unchanged. It should be understood that the transmitter further sends the identification information to the receiver, so that the receiver performs inverse transformation of power spectrum shaping on a received signal based on the identification information, to restore an original signal that is before the transmitter performs power spectrum shaping.

In some possible implementations, each symbol set includes V symbol subsets, each symbol subset includes a plurality of symbols, and V is an integer greater than 1. Inverting the polarity of the at least one symbol in the at least one symbol set includes: inverting polarities of all symbols in at least one symbol subset in the at least one symbol set. In this implementation, the transmitter performs power spectrum shaping by using the symbol subset as a granularity, to implement power spectrum suppression at a plurality of frequency positions, so as to cope with a scenario in which multi-frequency interference may occur.

In some possible implementations, inverting the polarity of the at least one symbol in the at least one symbol set includes: if polarities of all symbols in an $h^{th}$ symbol subset in a $q^{th}$ symbol set remain unchanged, determining a frequency characteristic parameter corresponding to an $h^{th}$ symbol subset in each of a $0^{th}$ symbol set to the $q^{th}$ symbol set, and performing summation on frequency characteristic parameters corresponding to $h^{th}$ symbol subsets in all of the $0^{th}$ symbol set to the $q^{th}$ symbol set and performing a modulo operation, to obtain a ninth summation value, where $0 \leq h \leq V-1$, and a frequency characteristic parameter corresponding to each symbol subset is related to the target frequency; or if polarities of all symbols in an $h^{th}$ symbol subset in a $q^{th}$ symbol set are inverted, determining a frequency characteristic parameter corresponding to an $h^{th}$ symbol subset in each of a $0^{th}$ symbol set to the $q^{th}$ symbol set, and performing summation on frequency characteristic parameters corresponding to $h^{th}$ symbol subsets in all of the $0^{th}$ symbol set to the $q^{th}$ symbol set and performing a modulo operation, to obtain a tenth summation value; and if a square of the ninth summation value is greater than a square of the tenth summation value, inverting the polarities of all the symbols in the $h^{th}$ symbol subset in the $q^{th}$ symbol set; or if a square of the ninth summation value is less than or equal to a square of the tenth summation value, keeping the polarities of all the symbols in the $h^{th}$ symbol subset in the $q^{th}$ symbol set unchanged.

In some possible implementations, the frequency characteristic parameter corresponding to the symbol subset is represented as:

$$\sum_{s_j \in U_h} s_j \times e^{-i \times 2\pi \times \frac{f}{Baudrate} \times (j + (q-1) \times (N+P))}$$

S represents a symbol in the symbol set, i represents an imaginary part of a complex number, j represents a sequence number of the symbol in the symbol set, f represents the target frequency, Baudrate represents a baud rate for transmitting the second modulated signal and the identification information, q represents a sequence number of the symbol set, N represents a quantity of symbols in the symbol set, P represents a length of identification information corresponding to the symbol set, and $U_h$ represents the $h^{th}$ symbol subset in the $q^{th}$ symbol set.

In some possible implementations, the identification information includes M sub-identifiers that are in one-to-one correspondence with the M symbol sets, and the sub-identifier indicates whether symbol polarity inversion is performed on each symbol subset in a corresponding symbol set. It should be understood that the transmitter further sends the identification information to the receiver, so that the receiver performs inverse transformation of power spectrum adjustment on a received signal based on the identification information, to restore an original signal that is before the transmitter performs power spectrum adjustment.

In some possible implementations, inverting the polarity of the at least one symbol in the at least one symbol set includes: performing polarity inversion on a symbol in each symbol set separately in K manners, to obtain K symbol sets, where K is an integer greater than 1; obtaining K frequency characteristic parameters respectively corresponding to the K symbol sets obtained through the polarity inversion, where the K frequency characteristic parameters are all related to the target frequency; and determining a symbol set corresponding to a frequency characteristic parameter whose modulus value is the smallest in the K frequency characteristic parameters. In this implementation, the transmitter independently determines, for each symbol set, how to invert a symbol polarity, and selects an inversion manner having a best power suppression effect at the target frequency, to effectively avoid a case in which a power spectrum suppression effect corresponding to a local frequency position is poor.

In some possible implementations, a frequency characteristic parameter corresponding to any one of the K symbol sets obtained through the polarity inversion is represented as:

4

$$\sum_{s_j \in C_{D_q} U_k} s_j \times e^{-i \times 2\pi \times \frac{f}{Baudrate} \times (j+(q-1) \times (N+P))} - \sum_{s_j \in U_k} s_j \times e^{-i \times 2\pi \times \frac{f}{Baudrate} \times (j+(q-1) \times (N+P))}$$

S represents a symbol in the symbol set, i represents an imaginary part of a complex number, j represents a sequence number of the symbol in the symbol set, f represents the target frequency, Baudrate represents a baud rate for transmitting the second modulated signal and the identification information, q represents a sequence number of the symbol set, $D_q$ represents a $q^{th}$ symbol set, N represents a quantity of symbols in the symbol set, P represents a length of identification information corresponding to the symbol set, $U_k$ represents a symbol whose polarity is inverted in the $q^{th}$ symbol set, and $C_{D_q} U_k$ represents a symbol whose polarity remains unchanged in the $q^{th}$ symbol set.

In some possible implementations, the identification information includes M sub-identifiers that are in one-to-one correspondence with the M symbol sets, and the sub-identifier indicates a symbol polarity inversion manner used for a corresponding symbol set. It should be understood that the transmitter further sends the identification information to the receiver, so that the receiver performs inverse transformation of power spectrum adjustment on a received signal based on the identification information, to restore an original signal that is before the transmitter performs power spectrum adjustment.

In some possible implementations, the identification information includes the M sub-identifiers interleaved in the M symbol sets, and the M sub-identifiers are in one-to-one correspondence with the M symbol sets. In this implementation, the identification information is interleaved in the M symbol sets and sent together with the second modulated signal, so that the receiver can synchronously receive the signal and the identification information. An actual application effect is good.

In some possible implementations, after generating the identification information, the method further includes: performing forward error correction (Forward Error Correction, FEC) encoding on the identification information.

According to a second aspect, an embodiment of this application provides a signal processing method. The method is applied to a receiver. Specifically, the receiver receives a first signal and identification information that are sent by a transmitter through a channel. The first signal includes a signal sent by the transmitter and interference in channel transmission. Then, the receiver filters out a partial signal at a target frequency in the first signal to obtain a second signal, and the second signal may be considered as the signal sent by the transmitter. The second signal includes M symbol sets, each symbol set includes N symbols, M is an integer greater than 1, and N is an integer greater than 1. The identification information indicates polarity inversion statuses of the symbols in each symbol set. Further, the receiver inverts a polarity of at least one symbol in at least one symbol set based on the identification information to obtain a third signal including M×N symbols, so as to restore an original signal of the transmitter.

In this implementation, the signal transmitted by the transmitter does not overlap the interference or noise in frequency, and the receiver can effectively filter out the interference or the noise and cause no impairment to the signal from the transmitter. In addition, the receiver performs inverse transformation of power spectrum adjustment on the received signal based on the identification information, to restore the original signal that is before the transmitter performs power spectrum adjustment.

In some possible implementations, the identification information includes M sub-identifiers interleaved in the M symbol sets, and the M sub-identifiers are in one-to-one correspondence with the M symbol sets.

According to a third aspect, an embodiment of this application provides a chip. The chip includes a processor and a memory, the memory and the processor are connected to each other through a line, the memory stores instructions, and the processor is configured to perform the method described in any one of the implementations of the first aspect and the second aspect.

According to a fourth aspect, an embodiment of this application provides a transmitter device. The transmitter device includes a processing unit and a sending unit. The processing unit is configured to: obtain a first modulated signal, where the first modulated signal includes M symbol sets, each symbol set includes N symbols, M is an integer greater than 1, and N is an integer greater than 1; invert a polarity of at least one symbol in at least one symbol set to obtain a second modulated signal including M×N symbols, where power of the second modulated signal at a target frequency is less than power of the first modulated signal at the target frequency; and generate identification information, where the identification information indicates polarity inversion statuses of the symbols in each symbol set. The sending unit is configured to send the second modulated signal and the identification information.

In some possible implementations, the processing unit is specifically configured to invert polarities of all symbols in the at least one symbol set.

In some possible implementations, the processing unit is specifically configured to: if polarities of all symbols in a $q^{th}$ symbol set remain unchanged, determine a frequency characteristic parameter corresponding to each of a $0^{th}$ symbol set to the $q^{th}$ symbol set, and perform summation on frequency characteristic parameters corresponding to all of the $0^{th}$ symbol set to the $q^{th}$ symbol set and perform a modulo operation, to obtain a first summation value, where 0<q≤M-1, and the frequency characteristic parameter corresponding to each symbol set is related to the target frequency; or if polarities of all symbols in a $q^{th}$ symbol set are inverted, determine, based on the target frequency, a frequency characteristic parameter corresponding to each of a $0^{th}$ symbol set to the $q^{th}$ symbol set, and perform summation on frequency characteristic parameters corresponding to all of the $0^{th}$ symbol set to the $q^{th}$ symbol set and perform a modulo operation, to obtain a second summation value; and if a square of the first summation value is greater than a square of the second summation value, invert the polarities of all the symbols in the $q^{th}$ symbol set; or if a square of the first summation value is less than or equal to a square of the second summation value, keep the polarities of all the symbols in the $q^{th}$ symbol set unchanged.

In some possible implementations, the target frequency is 0, and a frequency characteristic parameter corresponding to the symbol set is a sum of values of all symbols in the symbol set.

In some possible implementations, the values of all the symbols in the symbol set are real numbers, and the processing unit is specifically configured to: obtain a third summation value obtained by performing summation on values of all symbols in a $0^{th}$ symbol set to a $(q-1)^{th}$ symbol set, and obtain a fourth summation value obtained by performing summation on values of all symbols in a $q^{th}$ symbol set; and if polarities of the third summation value and the fourth summation value are the same, invert polarities of all the symbols in the $q^{th}$ symbol set; or if polarities of the third summation value and the fourth summation value are different, keep polarities of all the symbols in the $q^{th}$ symbol set unchanged.

In some possible implementations, the target frequency includes a first frequency and a second frequency, a first frequency characteristic parameter corresponding to each symbol set is related to the first frequency, and a second frequency characteristic parameter corresponding to each symbol set is related to the second frequency. The processing unit is specifically configured to: if polarities of all symbols in a $q^{th}$ symbol set remain unchanged, determine a first frequency characteristic parameter corresponding to each of a $0^{th}$ symbol set to the $q^{th}$ symbol set, perform summation on first frequency characteristic parameters corresponding to all of the $0^{th}$ symbol set to the $q^{th}$ symbol set and perform a modulo operation, to obtain a fifth summation value, determine a second frequency characteristic parameter corresponding to each of the $0^{th}$ symbol set to the $q^{th}$ symbol set, and perform summation on second frequency characteristic parameters corresponding to all of the $0^{th}$ symbol set to the $q^{th}$ symbol set and perform a modulo operation, to obtain a sixth summation value; or if polarities of all symbols in a $q^{th}$ symbol set are inverted, determine a first frequency characteristic parameter corresponding to each of a $0^{th}$ symbol set to the $q^{th}$ symbol set, perform summation on first frequency characteristic parameters corresponding to all of the $0^{th}$ symbol set to the $q^{th}$ symbol set and perform a modulo operation, to obtain a seventh summation value, determine a second frequency characteristic parameter corresponding to each of the $0^{th}$ symbol set to the $q^{th}$ symbol set, and perform summation on second frequency characteristic parameters corresponding to all of the $0^{th}$ symbol set to the $q^{th}$ symbol set and perform a modulo operation, to obtain an eighth summation value; and if a sum of a square of the fifth summation value and a square of the sixth summation value is greater than a sum of a square of the seventh summation value and a square of the eighth summation value, invert the polarities of all the symbols in the $q^{th}$ symbol set; or if a sum of a square of the fifth summation value and a square of the sixth summation value is less than or equal to a sum of a square of the seventh summation value and a square of the eighth summation value, keep the polarities of all the symbols in the $q^{th}$ symbol set unchanged.

In some possible implementations, the frequency characteristic parameter corresponding to the symbol set is represented as:

$$\sum_{s_j \in D_q} s_j \times e^{-i \times 2\pi \times \frac{f}{Baudrate} \times (j + (q-1) \times (N+P))}$$

S represents a symbol in the symbol set, i represents an imaginary part of a complex number, j represents a sequence number of the symbol in the symbol set, f represents the target frequency, Baudrate represents a baud rate for transmitting the second modulated signal and the identification information, q represents a sequence number of the symbol set, N represents a quantity of symbols in the symbol set, P represents a length of identification information corresponding to the symbol set, and Dq represents all the symbols in the $q^{th}$ symbol set.

In some possible implementations, the identification information includes M sub-identifiers that are in one-to-one correspondence with the M symbol sets, a first value of the sub-identifier indicates that polarities of all symbols in a corresponding symbol set are inverted, and a second value of the sub-identifier indicates that the polarities of all the symbols in the corresponding symbol set remain unchanged.

In some possible implementations, each symbol set includes V symbol subsets, each symbol subset includes a plurality of symbols, and V is an integer greater than 1. The processing unit is specifically configured to invert polarities of all symbols in at least one symbol subset in the at least one symbol set.

In some possible implementations, the processing unit is specifically configured to: if polarities of all symbols in an $h^{th}$ symbol subset in a $q^{th}$ symbol set remain unchanged, determine a frequency characteristic parameter corresponding to an $h^{th}$ symbol subset in each of a $0^{th}$ symbol set to the $q^{th}$ symbol set, and perform summation on frequency characteristic parameters corresponding to $h^{th}$ symbol subsets in all of the $0^{th}$ symbol set to the $q^{th}$ symbol set and perform a modulo operation, to obtain a ninth summation value, where $0 \leq h \leq V-1$, and a frequency characteristic parameter corresponding to each symbol subset is related to the target frequency; or if polarities of all symbols in an $h^{th}$ symbol subset in a $q^{th}$ symbol set are inverted, determine a frequency characteristic parameter corresponding to an $h^{th}$ symbol subset in each of a $0^{th}$ symbol set to the $q^{th}$ symbol set, and perform summation on frequency characteristic parameters corresponding to $h^{th}$ symbol subsets in all of the $0^{th}$ symbol set to the $q^{th}$ symbol set and perform a modulo operation, to obtain a tenth summation value; and if a square of the ninth summation value is greater than a square of the tenth summation value, invert the polarities of all the symbols in the $h^{th}$ symbol subset in the $q^{th}$ symbol set; or if a square of the ninth summation value is less than or equal to a square of the tenth summation value, keep the polarities of all the symbols in the $h^{th}$ symbol subset in the $q^{th}$ symbol set unchanged.

In some possible implementations, the frequency characteristic parameter corresponding to the symbol subset is represented as:

$$\sum_{s_j \in U_h} s_j \times e^{-i \times 2\pi \times \frac{f}{Baudrate} \times (j+(q-1) \times (N+P))}$$

S represents a symbol in the symbol set, i represents an imaginary part of a complex number, j represents a sequence number of the symbol in the symbol set, f represents the target frequency, Baudrate represents a baud rate for transmitting the second modulated signal and the identification information, q represents a sequence number of the symbol set, N represents a quantity of symbols in the symbol set, P represents a length of identification information corresponding to the symbol set, and $U_h$ represents the $h^{th}$ symbol subset in the $q^{th}$ symbol set.

In some possible implementations, the identification information includes M sub-identifiers that are in one-to-one correspondence with the M symbol sets, and the sub-identifier indicates whether symbol polarity inversion is performed on each symbol subset in a corresponding symbol set.

In some possible implementations, the processing unit is specifically configured to: separately perform polarity inversion on a symbol in each symbol set in K manners, to obtain K symbol sets, where K is an integer greater than 1; obtain K frequency characteristic parameters respectively corresponding to the K symbol sets obtained through the polarity inversion, where the K frequency characteristic parameters are all related to the target frequency; and determine a symbol set corresponding to a frequency characteristic parameter whose modulus value is the smallest in the K frequency characteristic parameters.

In some possible implementations, a frequency characteristic parameter corresponding to any one of the K symbol sets obtained through the polarity inversion is represented as:

$$\sum_{s_j \in C_{D_q} U_k} s_j \times e^{-i \times 2\pi \times \frac{f}{Baudrate} \times (j+(q-1) \times (N+P))} - \sum_{s_j \in U_k} s_j \times e^{-i \times 2\pi \times \frac{f}{Baudrate} \times (j+(q-1) \times (N+P))}$$

S represents a symbol in the symbol set, i represents an imaginary part of a complex number, j represents a sequence number of the symbol in the symbol set, f represents the target frequency, Baudrate represents a baud rate for transmitting the second modulated signal and the identification information, q represents a sequence number of the symbol set, $D_q$ represents a $q^{th}$ symbol set, N represents a quantity of symbols in the symbol set, P represents a length of identification information corresponding to the symbol set, $U_k$ represents a symbol whose polarity is inverted in the $q^{th}$ symbol set, and $C_{D_q} U_k$ represents a symbol whose polarity remains unchanged in the $q^{th}$ symbol set.

In some possible implementations, the identification information includes M sub-identifiers that are in one-to-one correspondence with the M symbol sets, and the sub-identifier indicates a symbol polarity inversion manner used for a corresponding symbol set.

In some possible implementations, the identification information includes the M sub-identifiers interleaved in the M symbol sets, and the M sub-identifiers are in one-to-one correspondence with the M symbol sets.

In some possible implementations, the processing unit is further configured to perform FEC encoding on the identification information.

According to a fifth aspect, an embodiment of this application provides a receiver device. The receiver device includes a receiving unit, a filtering unit, and a processing unit. The receiving unit is configured to receive a first signal and identification information that are sent by a transmitter through a channel. The filtering unit is configured to filter out a partial signal at a target frequency in the first signal to obtain a second signal, where the second signal includes M symbol sets, each symbol set includes N symbols, M is an integer greater than 1, N is an integer greater than 1, and the identification information indicates polarity inversion statuses of the symbols in each symbol set. The processing unit is configured to invert a polarity of at least one symbol in at least one symbol set based on the identification information to obtain a third signal including M×N symbols.

In some possible implementations, the identification information includes M sub-identifiers interleaved in the M symbol sets, and the M sub-identifiers are in one-to-one correspondence with the M symbol sets.

According to a sixth aspect, an embodiment of this application provides a communication system. The communication system includes the transmitter device described in any one of the implementations of the fourth aspect and the receiver device described in any one of the implementations of the fifth aspect.

It can be learned from the foregoing technical solutions that embodiments of this application have the following advantages:

In embodiments of this application, a transmitter adjusts a power spectrum of a to-be-sent signal based on a target frequency of interference or noise. Specifically, the transmitter inverts polarities of some symbols in the to-be-sent signal based on the target frequency, to implement power spectrum adjustment, so that power of a to-be-sent signal at the target frequency is suppressed, thereby helping resist impact of the interference or the noise on a channel on transmission performance. In other words, the transmitter may flexibly adjust the power spectrum of the to-be-sent signal based on an actual frequency of the interference or the noise, so that the to-be-sent signal does not overlap the interference or the noise in frequency, and a receiver can effectively filter out the interference or the noise and cause no impairment to the signal from the transmitter. In addition, the transmitter further sends identification information to the receiver, so that the receiver performs inverse transformation of power spectrum adjustment on a received signal based on the identification information, to restore the original signal that is before the transmitter performs power spectrum adjustment.

## BRIEF DESCRIPTION OF DRAWINGS

FIG. 1 is a diagram of a communication system to which an embodiment of this application is applied;

FIG. 2 is a first schematic flowchart of a signal processing method according to an embodiment of this application;

FIG. 3 is a first diagram of suppressing a power spectrum according to an embodiment of this application;

FIG. 4 is a second diagram of suppressing a power spectrum according to an embodiment of this application;

FIG. 5 is a third diagram of suppressing power spectra according to an embodiment of this application;

FIG. 6 is a fourth diagram of suppressing power spectra according to an embodiment of this application;

FIGS. 7A and 7B are diagrams of interleaving identification information in a second modulated signal according to an embodiment of this application;

FIG. 8 is a second schematic flowchart of a signal processing method according to an embodiment of this application;

FIG. 9 is a diagram of filtering performed by a receiver according to an embodiment of this application;

FIG. 10 is a diagram of a structure of a transmitter device according to an embodiment of this application;

FIG. 11 is a diagram of another structure of a transmitter device according to an embodiment of this application;

FIG. 12 is a diagram of a structure of a receiver device according to an embodiment of this application; and

FIG. 13 is a diagram of another structure of a receiver device according to an embodiment of this application.

## DESCRIPTION OF EMBODIMENTS

Embodiments of this application provide a signal processing method and a related apparatus. A transmitter inverts polarities of some symbols in a to-be-sent signal based on a target frequency, to implement power spectrum adjustment, so that power of a to-be-sent signal at the target frequency is suppressed, thereby helping resist impact of interference or noise on a channel on transmission performance.

It should be noted that in the specification, claims, and the foregoing accompanying drawings of this application, the terms "first", "second", and the like are intended to distinguish between similar objects but do not limit a specific order or sequence. It should be understood that the foregoing terms may be interchanged in proper cases, so that embodiments described in this application can be implemented in an order other than the content described in this application. In addition, the terms "include", "have", and any other variant thereof are intended to cover a non-exclusive inclusion. For example, a process, a method, a system, a product, or a device that includes a series of steps or units is not necessarily limited to those expressly listed steps or units, but may include other steps or units not expressly listed or inherent to the process, the method, the product, or the device.

It should be understood that this application is applicable to any system in which impairment occurs in a signal frequency band, especially a digital baseband communication system, for example, a data center interconnect, fixed network transfer, or passive access network communication system. In these systems, digital signals are prone to narrowband impairment in the signal frequency band due to wide spectrum characteristics. According to the signal processing method that is applied to the transmitter and a receiver and that is provided in this application, the interference or the noise can be effectively filtered out, and no impairment is caused to the signal from the transmitter.

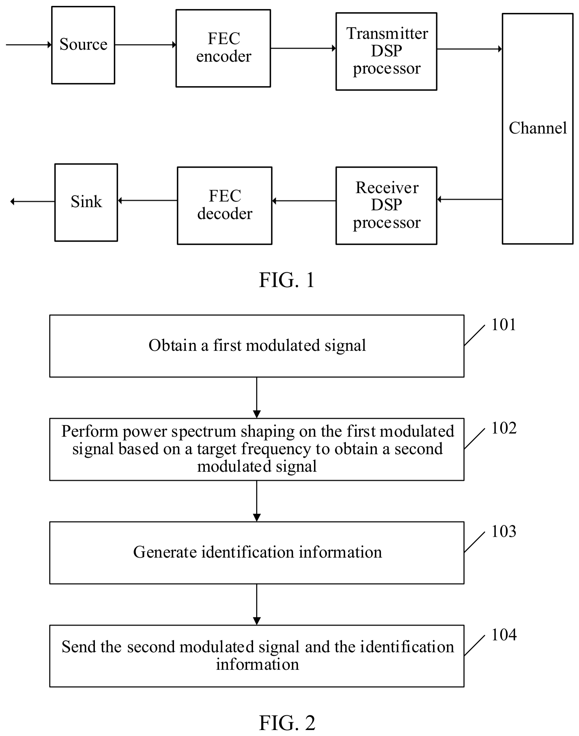

FIG. 1 is a diagram of a communication system to which an embodiment of this application is applied. As shown in FIG. 1, at a transmitter, a source provides a to-be-sent data stream. An encoder receives and encodes the data stream. Encoded codeword information combining a parity bit and an information bit is sent to a transmitter digital signal processing (Digital Signal Processing, DSP) processor for framing, and is transmitted through a channel to a receiver. After receiving a signal with distortion resulting from noise or other impairment on the channel, the receiver sends the signal to a receiver DSP processor for signal impairment compensation and other operations. Then, a decoder performs decoding to restore original data, and sends the data to a sink.

FIG. 2 is a first schematic flowchart of a signal processing method according to an embodiment of this application. In this embodiment, the signal processing method is applied to a transmitter, and the signal processing method includes the following steps.

101: Obtain a first modulated signal.

In this embodiment, the first modulated signal includes M symbol sets, each symbol set includes N symbols, and both M and N are integers greater than 1. For example, N is usually an integer multiple of 2. It should be understood that each symbol set may also be referred to as a symbol block (block), and each symbol in the block may include a plurality of bits.

It should be noted that a specific modulation scheme of the modulated signal is not limited in this application. For example, the modulation scheme includes but is not limited to non-return-to-zero (Non-Return-to-Zero, NRZ) modulation, multilevel pulse amplitude modulation (Multilevel Pulse Amplitude Modulation, PAMn), and the like. The PAMn modulation includes PAM2 modulation, PAM4 modulation, or PAM modulation with a higher level. In some possible scenarios, a value of the symbol is a real number. For example, in the NRZ modulation, a value of each symbol may be -1 or +1. For example, in the PAM4 modulation, a value of each symbol may be -3, -1, +1, or +3. In some other possible scenarios, a value of the symbol is a complex number. For example, quadrature phase shift keying (Quadrature Phase Shift Keying, QPSK) modulation or quadrature amplitude modulation (Quadrature Amplitude Modulation, QAM) is used. For example, in QPSK, a value of each symbol is 1+1i, 1-1i, -1+1i, or -1-1i.

102: Perform power spectrum shaping on the first modulated signal based on a target frequency to obtain a second modulated signal.

Before performing power spectrum shaping on the first modulated signal, the transmitter first determines a frequency of existing interference or noise. The frequency is denoted as the target frequency herein. Further, the transmitter performs power spectrum shaping on the first modulated signal in a targeted manner based on the target frequency to obtain the second modulated signal, so that power of the second modulated signal at the target frequency is suppressed, that is, the power of the second modulated signal at the target frequency is less than power of the first modulated signal at the target frequency. Specifically, the transmitter inverts a polarity of at least one symbol in at least one symbol set based on the target frequency. It should be understood that, in the first modulated signal, a specific symbol that is in a specific symbol set and on which polarity inversion needs to be performed depends on a specific situation. The second modulated signal still includes M×N symbols. In other words, the second modulated signal includes both a symbol set obtained through symbol polarity inversion and a symbol set on which no symbol polarity inversion is performed.

The following separately describes several specific implementations of power spectrum shaping.

Implementation 1: A symbol set at a start position in the first modulated signal is referred to as a 0th symbol set. Whether polarities of symbols in each symbol set need to be inverted is sequentially determined from a 1st symbol set. Specifically, the transmitter determines, based on the target frequency, a frequency characteristic parameter corresponding to each symbol set. In other words, the frequency characteristic parameter corresponding to each symbol set is related to the target frequency. Further, the transmitter determines, based on frequency characteristic parameters of a current symbol set and all previous symbol sets, whether polarities of all symbols in the current symbol set need to be inverted.

It should be understood that the frequency characteristic parameter corresponding to the symbol set is represented by using the following Formula 1:

$$\sum_{s_j \in D_q} s_j \times e^{-i \times 2\pi \times \frac{f}{Baudrate} \times (j + (q-1) \times (N+P))}$$

S represents a symbol in the symbol set, i represents an imaginary part of a complex number, j represents a sequence number of the symbol in the symbol set, f represents the target frequency, Baudrate represents a baud rate for transmitting the second modulated signal and identification information, q represents a sequence number of the symbol set, N represents a quantity of symbols in the symbol set, P represents a length of identification information corresponding to the symbol set, and Dq represents all symbols in a qth symbol set.

The following uses the qth symbol set as an example to describe how to determine whether polarities of the symbols in the qth symbol set need to be inverted, where 0<q≤M-1. First, a frequency characteristic parameter corresponding to each of the 0th symbol set to a (q-1)th symbol set is determined based on the target frequency. It is assumed that the polarities of all the symbols in the $q^{th}$ symbol set remain unchanged. A frequency characteristic parameter corresponding to the $q^{th}$ symbol set is determined based on the target frequency, and summation is performed on frequency characteristic parameters corresponding to all of the $0^{th}$ symbol set to the $q^{th}$ symbol set and a modulo operation is performed, to obtain a first summation value. It is assumed that the polarities of all the symbols in the $q^{th}$ symbol set are inverted. A frequency characteristic parameter corresponding to the $q^{th}$ symbol set is determined based on the target frequency, and summation is performed on frequency characteristic parameters corresponding to all of the $0^{th}$ symbol set to the $q^{th}$ symbol set and a modulo operation is performed, to obtain a second summation value. Further, whether a square of the first summation value is greater than a square of the second summation value is determined. If the square of the first summation value is greater than the square of the second summation value, the polarities of all the symbols in the $q^{th}$ symbol set are inverted. If the square of the first summation value is less than or equal to the square of the second summation value, the polarities of all the symbols in the $q^{th}$ symbol set are maintained. It should be understood that, performing a modulo operation on a real number is to obtain an absolute value of the real number, and performing a modulo operation on a complex number is to obtain a distance between the complex number and an origin on a complex plane.

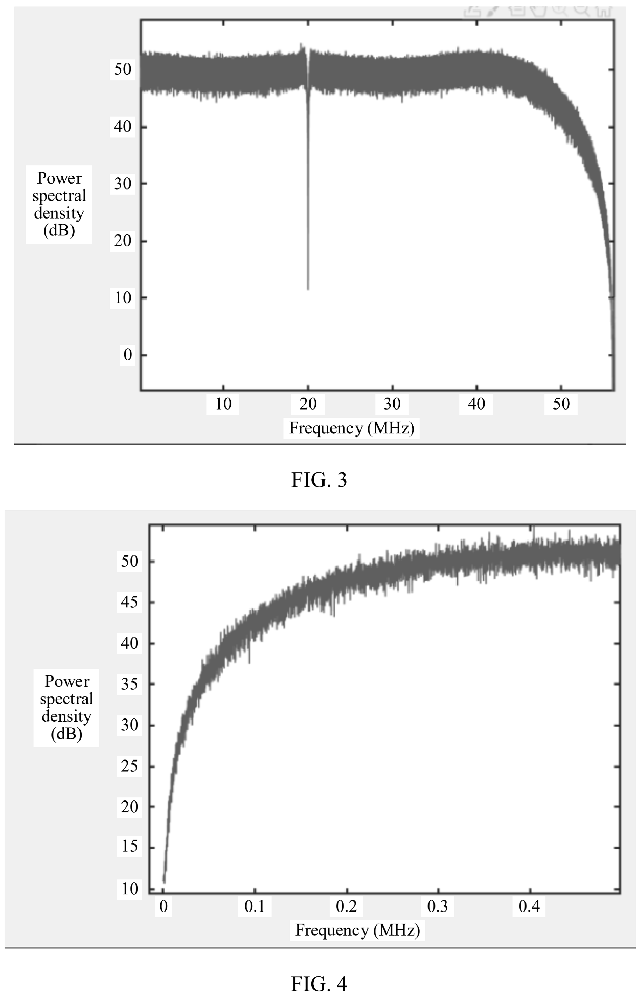

FIG. 3 is a first diagram of suppressing a power spectrum according to an embodiment of this application. As shown in FIG. 3, a horizontal coordinate represents a frequency f (unit: MHz), and a vertical coordinate represents a power spectral density (power spectral density, PSD) (unit: dB). FIG. 3 shows an effect of suppressing power of a signal with a baud rate of 50 MHz at a frequency of 20 MHz, that is, the target frequency is 20 MHz. It can be learned that the power spectrum is suppressed by more than 40 dB at the target frequency. This achieves a good power spectrum suppression effect.

It should be noted that, in a possible scenario, to cope with a common low-frequency loss and interference, for example, signal impairment occurs near a direct current frequency, the transmitter calculates, by using the target frequency as 0, the frequency characteristic parameter corresponding to each symbol set, and further determines, based on the frequency characteristic parameter, whether the polarities of the symbols in the current symbol set need to be inverted. It can be learned from the foregoing Formula 1 that when the target frequency f is 0, the frequency characteristic parameter corresponding to the symbol set is actually a sum of values of all symbols in the symbol set. It should be understood that, when the values of the symbols are complex numbers, the sum of the values of the symbols is a result obtained through real part addition and imaginary part addition of the complex numbers. For example, if symbol sequences are 1+1j, 1-1j, and 1+1j, the result obtained through value summation is 3+1j. The following uses the $q^{th}$ symbol set as an example to describe how to determine, in this scenario, whether polarities of the symbols in the $q^{th}$ symbol set need to be inverted. Specifically, the transmitter obtains a third summation value obtained by performing summation on all symbols in the $0^{th}$ symbol set to a $(q-1)^{th}$ symbol set, and obtains a fourth summation value obtained by performing summation on all the symbols in the $q^{th}$ symbol set. Further, whether polarities of the third summation value and the fourth summation value are the same is determined. If the polarities of the third summation value and the fourth summation value are the same, the polarities of all the symbols in the $q^{th}$ symbol set are inverted to obtain a $q^{th}$ symbol set. If the polarities of the third summation value and the fourth summation value are different, the polarities of all the symbols in the $q^{th}$ symbol set are maintained.

It should be noted that, for the $q^{th}$ symbol set, if symbol polarity inversion is performed on a part of the $0^{th}$ symbol set to the $(q-1)^{th}$ symbol set, whether the polarities of the symbols in the $q^{th}$ symbol set need to be inverted needs to be determined based on a frequency characteristic parameter of a symbol set obtained through symbol polarity inversion.

FIG. 4 is a second diagram of suppressing a power spectrum according to an embodiment of this application. As shown in FIG. 4, a horizontal coordinate represents a frequency f (unit: MHz), and a vertical coordinate represents a PSD (unit: dB). FIG. 4 shows an effect of suppressing a signal at a low frequency when the target frequency is 0. In this way, a signal transmitted by the transmitter does not overlap interference or noise in frequency.

Implementation 2: The transmitter may further suppress power spectra at a plurality of frequency positions through power spectrum shaping. Specific frequency positions at which power spectra are suppressed are subject to frequency positions at which actual interference or noise may occur. This is not limited herein. The following uses an example in which the interference or the noise occurs at a first frequency f1 and a second frequency f2 for description, that is, the target frequency includes the first frequency f1 and the second frequency f2. It should be understood that a first frequency characteristic parameter corresponding to the symbol set is related to the first frequency f1, and a second frequency characteristic parameter corresponding to the symbol set is related to the second frequency f2. The first frequency characteristic parameter corresponding to the symbol set is represented by substituting the first frequency f1 into the foregoing Formula 1, and the second frequency characteristic parameter corresponding to the symbol set is represented by substituting the second frequency f2 into the foregoing Formula 1.

Specifically, a symbol set at a start position in the first modulated signal is referred to as a $0^{th}$ symbol set. Whether polarities of symbols in each symbol set need to be inverted is sequentially determined from a $1^{st}$ symbol set. Specifically, a $q^{th}$ symbol set is used as an example. First, a first frequency characteristic parameter corresponding to each of the $0^{th}$ symbol set to a $(q-1)^{th}$ symbol set is determined based on the first frequency, and a second frequency characteristic parameter corresponding to each of the $0^{th}$ symbol set to the $(q-1)^{th}$ symbol set is determined based on the second frequency. It is assumed that polarities of all symbols in the $q^{th}$ symbol set remain unchanged. A first frequency characteristic parameter corresponding to the $q^{th}$ symbol set is determined based on the first frequency, and a second frequency characteristic parameter corresponding to the $q^{th}$ symbol set is determined based on the second frequency. Then, summation is performed on first frequency characteristic parameters corresponding to all of the $0^{th}$ symbol set to the $q^{th}$ symbol set and a modulo operation is performed, to obtain a fifth summation value, and summation is performed on second frequency characteristic parameters corresponding to all of the $0^{th}$ symbol set to the $q^{th}$ symbol set and a modulo operation is performed, to obtain a sixth summation value. It is assumed that polarities of all symbols in the $q^{th}$ symbol set are inverted. A first frequency characteristic parameter corresponding to the $q^{th}$ symbol set is determined based on the first frequency, and a second frequency characteristic parameter corresponding to the $q^{th}$ symbol set is determined based on the second frequency. Then, summation is performed on first frequency characteristic parameters corresponding to all of the $0^{th}$ symbol set to the $q^{th}$ symbol set and a modulo operation is performed, to obtain a seventh summation value, and summation is performed on second frequency characteristic parameters corresponding to all of the $0^{th}$ symbol set to the $q^{th}$ symbol set and a modulo operation is performed, to obtain an eighth summation value. Further, whether a sum of a square of the fifth summation value and a square of the sixth summation value is greater than a sum of a square of the seventh summation value and a square of the eighth summation value is determined. If the sum of the square of the fifth summation value and the square of the sixth summation value is greater than the sum of the square of the seventh summation value and the square of the eighth summation value, the polarities of all the symbols in the $q^{th}$ symbol set are inverted. If the sum of the square of the fifth summation value and the square of the sixth summation value is not greater than the sum of the square of the seventh summation value and the square of the eighth summation value, the polarities of all the symbols in the $q^{th}$ symbol set are maintained.

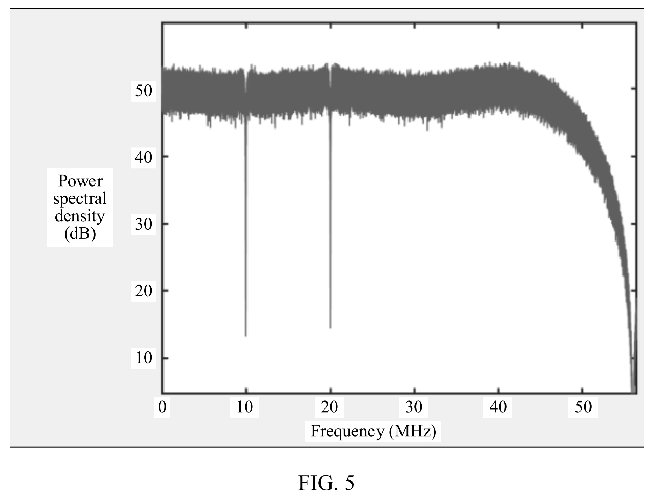

FIG. 5 is a third diagram of suppressing power spectra according to an embodiment of this application. As shown in FIG. 5, a horizontal coordinate represents a frequency (unit: MHz), and a vertical coordinate represents a PSD (unit: dB). FIG. 5 shows effects of suppressing power of a signal with a baud rate of 50 MHz at frequencies of 10 MHz and 20 MHz, that is, the first frequency is 10 MHz, and the second frequency is 20 MHz. It can be learned that the power spectra are suppressed by more than 40 dB at both the first frequency and the second frequency. This achieves a good power spectrum suppression effect.

Implementation 3: Each symbol set includes V symbol subsets, and each symbol subset includes a plurality of symbols. It should be understood that a manner of division into V symbol subsets is the same for all symbol sets. However, a specific manner of dividing the symbol set into the symbol subsets is not limited in this application. For example, lengths of $0^{th}$ symbol subsets in all the symbol sets are the same, lengths of $1^{st}$ symbol subsets in all the symbol sets are the same, and by analogy, lengths of $(V-1)^{th}$ symbol subsets in all the symbol sets are the same. Lengths of different symbol subsets in a same symbol set may be the same or may be different.

The transmitter determines, based on the target frequency, a frequency characteristic parameter corresponding to each symbol subset, and determines, based on the frequency characteristic parameter corresponding to each symbol subset, whether polarities of the symbols in the symbol subset need to be inverted. In other words, in Implementation 3, the transmitter performs power spectrum shaping by using the symbol subset as a granularity, to implement power spectrum suppression at a plurality of frequency positions, so as to cope with a scenario in which multi-frequency interference may occur. A symbol set at a start position in the first modulated signal is referred to as a $0^{th}$ symbol set herein. Whether polarities of symbols in the symbol subsets in each symbol set need to be inverted is sequentially determined from a $1^{st}$ symbol set. The following uses an $h^{th}$ symbol subset in a $q^{th}$ symbol set as an example to describe how to determine whether polarities of symbols in the $h^{th}$ symbol subset in the $q^{th}$ symbol set need to be inverted, where $0 \leq h \leq V-1$.

First, a frequency characteristic parameter corresponding to an $h^{th}$ symbol subset in each of the $0^{th}$ symbol set to a $(q-1)^{th}$ symbol set is determined based on the target frequency. It is assumed that polarities of all of the symbols in the $h^{th}$ symbol subset in the $q^{th}$ symbol set remain unchanged. A frequency characteristic parameter corresponding to the $h^{th}$ symbol subset in the $q^{th}$ symbol set is determined based on the target frequency, and summation is performed on frequency characteristic parameters corresponding to $h^{th}$ symbol subsets in all of the $0^{th}$ symbol set to the $q^{th}$ symbol set and a modulo operation is performed, to obtain a ninth summation value. It is assumed that polarities of all of the symbols in the $h^{th}$ symbol subset in the $q^{th}$ symbol set are inverted. A frequency characteristic parameter corresponding to the $h^{th}$ symbol subset in the $q^{th}$ symbol set is determined based on the target frequency, and summation is performed on frequency characteristic parameters corresponding to $h^{th}$ symbol subsets in all of the $0^{th}$ symbol set to the $q^{th}$ symbol set and a modulo operation is performed, to obtain a tenth summation value. Further, whether a square of the ninth summation value is greater than a square of the tenth summation value is determined. If the square of the ninth summation value is greater than the square of the tenth summation value, the polarities of all the symbols in the $h^{th}$ symbol subset in the $q^{th}$ symbol set are inverted. If the square of the ninth summation value is less than or equal to the square of the tenth summation value, the polarities of all the symbols in the $h^{th}$ symbol subset in the $q^{th}$ symbol set are maintained.

It should be understood that the frequency characteristic parameter corresponding to the symbol subset is represented by using the following Formula 2:

$$\sum_{s_j \in U_h} s_j \times e^{-i \times 2\pi \times \frac{f}{Baudrate} \times (j+(q-1) \times (N+P))}$$

S represents a symbol in the symbol set, i represents an imaginary part of a complex number, j represents a sequence number of the symbol in the symbol set, f represents the target frequency, Baudrate represents a baud rate for transmitting the second modulated signal and identification information, q represents a sequence number of the symbol set, N represents a quantity of symbols in the symbol set, P represents a length of identification information corresponding to the symbol set, and $U_h$ represents the $h^{th}$ symbol subset in the $q^{th}$ symbol set.

In a possible scenario, each symbol set is divided into two symbol subsets that are respectively denoted as a first symbol subset and a second symbol subset. The first symbol subset includes even-numbered symbols in the symbol set, for example, a $0^{th}$ symbol subset, a $2^{nd}$ symbol subset, and other even-numbered symbols. The second symbol subset includes odd-numbered symbols in the symbol set, for example, a $1^{st}$ symbol subset, a $3^{rd}$ symbol subset, and other odd-numbered symbols. Whether polarities of symbols in the two symbol subsets in each symbol set need to be inverted is sequentially determined in the foregoing manner. In this scenario, a case in which target frequencies appear in pairs can be effectively suppressed, and the target frequencies that appear in pairs may be denoted as f and Baudrate-f.

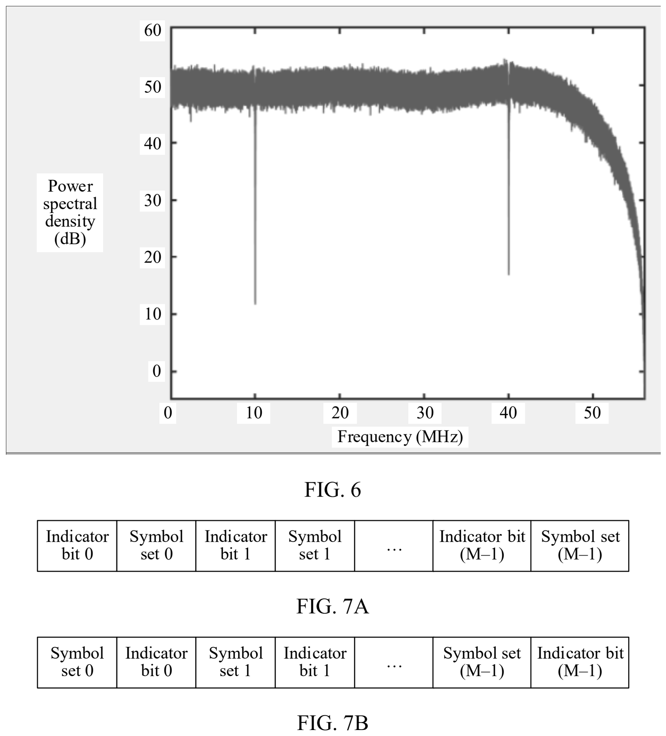

FIG. 6 is a fourth diagram of suppressing power spectra according to an embodiment of this application. As shown in FIG. 6, a horizontal coordinate represents a frequency (unit: MHz), and a vertical coordinate represents a PSD (unit: dB). It can be learned that target frequencies that appear in pairs are 10 MHz and 40 MHz respectively, and power spectra of a signal at 10 MHz and 40 MHz are suppressed.

Implementation 4: For each symbol set, a polarity of at least one symbol in the symbol set may be inverted in K different inversion manners, and a value of K is not limited herein. One of symbol sets is used as an example. Polarity inversion is performed on a symbol in the symbol set in K different inversion manners to obtain K symbol sets. The transmitter determines, based on the target frequency, K frequency characteristic parameters respectively corresponding to the K symbol sets. Further, the transmitter selects a symbol set corresponding to a frequency characteristic parameter whose modulus value is the smallest in the K frequency characteristic parameters as a symbol set obtained by performing symbol polarity inversion on the original symbol set. The modulus value of the frequency characteristic parameter is a value obtained by performing a modulo operation on the frequency characteristic parameter. It should be understood that, if there are a plurality of frequency characteristic parameters whose modulus values are the smallest, a symbol set corresponding to any frequency characteristic parameter whose modulus value is the smallest may be selected for output.

It should be understood that any one of the K symbol sets is used as an example, and a frequency characteristic parameter corresponding to the symbol set is represented by using the following Formula 3:

$$\sum_{s_j \in C_{D_q} U_k} s_j \times e^{-i \times 2\pi \times \frac{f}{Baudrate} \times (j+(q-1) \times (N+P))} - \sum_{s_j \in U_k} s_j \times e^{-i \times 2\pi \times \frac{f}{Baudrate} \times (j+(q-1) \times (N+P))}$$

S represents a symbol in the symbol set, i represents an imaginary part of a complex number, j represents a sequence number of the symbol in the symbol set, f represents the target frequency, Baudrate represents a baud rate for transmitting the second modulated signal and identification information, q represents a sequence number of the symbol set, $D_q$ represents a $q^{th}$ symbol set, N represents a quantity of symbols in the symbol set, P represents a length of identification information corresponding to the symbol set, $U_k$ represents a symbol whose polarity is inverted in the $q^{th}$ symbol set, and $C_{D_q} U_k$ represents a complementary set of $U_k$ in $D_q$, that is, a symbol whose polarity remains unchanged in the $q^{th}$ symbol set.

In a possible scenario, the polarity of the at least one symbol in the symbol set is inverted in the following manner. A target symbol in the symbol set is used as a start symbol, and polarities of the target symbol and all subsequent symbols are inverted. The target symbol may be any one of N symbols in the symbol set. In other words, in this scenario, there are N inversion manners for the symbol set.

It should be noted that, using Implementation 4 can effectively avoid a case in which a power spectrum suppression effect corresponding to a local frequency position is poor. For example, Implementation 4 may be further combined with the foregoing Implementation 2 to extend to a multi-frequency power spectrum suppression scenario, for example, extend to a scenario including the first frequency f1 and the second frequency f2, where f1 is substituted into the foregoing Formula 3 to obtain *metric*(f1), and f2 is substituted into the foregoing Formula 3 to obtain *metric*(f2), so as to obtain $|metric(f1)|^2 + |metric(f2)|^2$ through calculation. When a value of $|metric(f1)|^2 + |metric(f2)|^2$ is the minimum, it is determined to use a symbol set obtained in a corresponding inversion manner. For another example, Implementation 4 may be further combined with the foregoing Implementation 3 to extend to a scenario of dividing a symbol set into symbol subsets to implement power spectrum suppression.

103: Generate the identification information.

After completing step 102, the transmitter further generates the identification information in a specific manner of power spectrum shaping. The identification information indicates polarity inversion statuses of the symbols in each symbol set. Specifically, the identification information includes M sub-identifiers that are in one-to-one correspondence with the M symbol sets, and each sub-identifier indicates polarity inversion statuses of symbols in a corresponding symbol set. In an example, for Implementation 1 and Implementation 2 described in step 102, there are two cases for the symbol set: all symbol polarities are inverted and all symbol polarities remain unchanged. Therefore, the sub-identifier has two different values. For example, the value is 0 or 1, and the two values of the sub-identifier respectively indicate the two cases. In another example, for Implementation 3 described in step 102, the sub-identifier indicates whether polarity inversion is performed on each symbol subset in the corresponding symbol set. For any one of V symbol subsets in the symbol set, there are two cases in the symbol subset: all symbol polarities are inverted and all symbol polarities remain unchanged. Therefore, for the symbol set, there are 2V different polarity inversion statuses, and the sub-identifier has 2V different values to respectively indicate the 2V different polarity inversion statuses. In still another example, for Implementation 4 described in step 102, the sub-identifier indicates a symbol polarity inversion manner used for the corresponding symbol set. Because there are K different polarity inversion manners for each symbol set, the sub-identifier has K different values to respectively indicate the K different polarity inversion manners.

FIGS. 7A and 7B are diagrams of interleaving identification information in a second modulated signal according to an embodiment of this application. In a possible scenario, the M sub-identifiers included in the identification information may be interleaved in M symbol sets of the second modulated signal. As shown in FIG. 7A, each sub-identifier is closely adjacent to and before a start position of a symbol set corresponding to the sub-identifier. As shown in FIG. 7B, each sub-identifier is closely adjacent to and after an end position of a symbol set corresponding to the sub-identifier. In addition, each sub-identifier may alternatively be inserted into any position in the symbol set corresponding to the sub-identifier. This is not specifically limited herein.

In some other possible scenarios, the M sub-identifiers in the identification information may alternatively be inserted into the second modulated signal as a whole. For example, the identification information is inserted as a whole before all symbol sets of the second modulated signal. For another example, the identification information is inserted as a whole after all symbol sets of the second modulated signal. For still another example, the identification information is inserted into any position in the second modulated signal as a whole.

104: Send the second modulated signal and the identification information.

It should be noted that the second modulated signal and the identification information may be sent together to a receiver through a channel. Alternatively, the identification information may be independent of the second modulated signal, and sent to a receiver through another channel. In some possible scenarios, the transmitter may alternatively first perform FEC encoding on the identification information before sending the identification information. An FEC encoding manner includes but is not limited to a repetition code, a Hamming (Hamming) code, and BCH (Bose, Ray-Chaudhuri, Hocquenghem).

It can be learned from the foregoing descriptions that the transmitter adjusts a power spectrum of a to-be-sent signal based on a target frequency of interference or noise. Specifically, the transmitter inverts polarities of some symbols in the to-be-sent signal based on the target frequency, to implement power spectrum adjustment, so that power of a to-be-sent signal at the target frequency is suppressed, thereby helping resist impact of the interference or the noise on a channel on transmission performance. In other words, the transmitter may flexibly adjust the power spectrum of the to-be-sent signal based on an actual frequency of the interference or the noise, so that the to-be-sent signal does not overlap the interference or the noise in frequency, and the receiver can effectively filter out the interference or the noise and cause no impairment to the signal from the transmitter. In addition, the transmitter further sends identification information to the receiver, so that the receiver performs inverse transformation of power spectrum adjustment on a received signal based on the identification information, to restore the original signal that is before the transmitter performs power spectrum adjustment.

The following describes a processing procedure of the receiver.

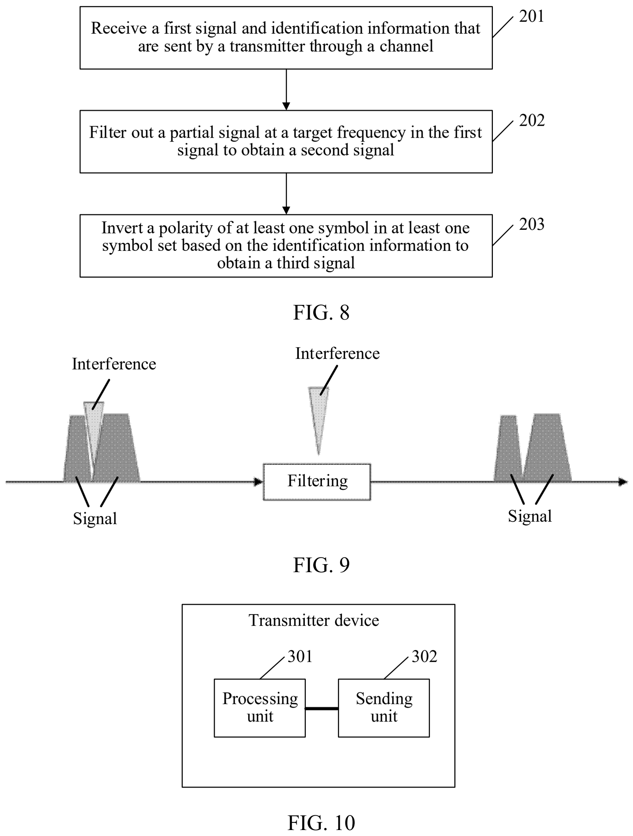

FIG. 8 is a second schematic flowchart of a signal processing method according to an embodiment of this application. In this embodiment, the signal processing method is applied to a receiver, and the signal processing method includes the following steps.

201: Receive a first signal and identification information that are sent by a transmitter through a channel.

It should be noted that the first signal received by the receiver includes a signal sent by the transmitter and interference in channel transmission. Because the transmitter inverts polarities of some symbols in an original signal before sending the signal, the identification information indicates polarity inversion statuses of symbols in the signal sent by the transmitter, to help the receiver restore the original signal of the transmitter based on the identification information.

202: Filter out a partial signal at a target frequency in the first signal to obtain a second signal.

FIG. 9 is a diagram of filtering performed by a receiver according to an embodiment of this application. It should be understood that the transmitter and the receiver pre-agree on a target frequency of existing interference, and power of the signal sent by the transmitter at the target frequency is suppressed, so that the sent signal does not overlap the interference in frequency. In this way, the receiver can effectively filter out the interference and cause no impairment to the signal from the transmitter. In other words, the second signal obtained by the receiver through filtering may be considered as the signal sent by the transmitter. It can be learned from the related descriptions of the embodiment shown in FIG. 2 that the second signal includes M symbol sets, each symbol set includes N symbols, M is an integer greater than 1, and N is an integer greater than 1. It should be noted that a filtering manner used by the receiver is not limited in this application. For example, the receiver implements filtering by using a band-pass filter. For another example, the receiver implements filtering by using an FIR (Finite Impulse Response) filter or an IIR (Infinite Impulse Response) digital filter in digital signal processing.

203: Invert a polarity of at least one symbol in at least one symbol set based on the identification information to obtain a third signal.

The receiver determines, based on the identification information, a symbol that is in a symbol set in the second signal and on which polarity inversion needs to be performed, and then inverts a polarity of the symbol, to restore a modulated signal that is before the transmitter performs power spectrum shaping. In other words, the operation of step 203 may be considered as an inverse operation of step 102. The third signal may be considered as the original signal that is before the transmitter performs power spectrum shaping.

FIG. 10 is a diagram of a structure of a transmitter device according to an embodiment of this application. As shown in FIG. 10, the transmitter device includes a processing unit 301 and a sending unit 302. The processing unit 301 is configured to perform the operations of step 101 to step 103, and the sending unit 302 is configured to perform the operation of step 104. It should be understood that the transmitter device provided in this application may alternatively be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

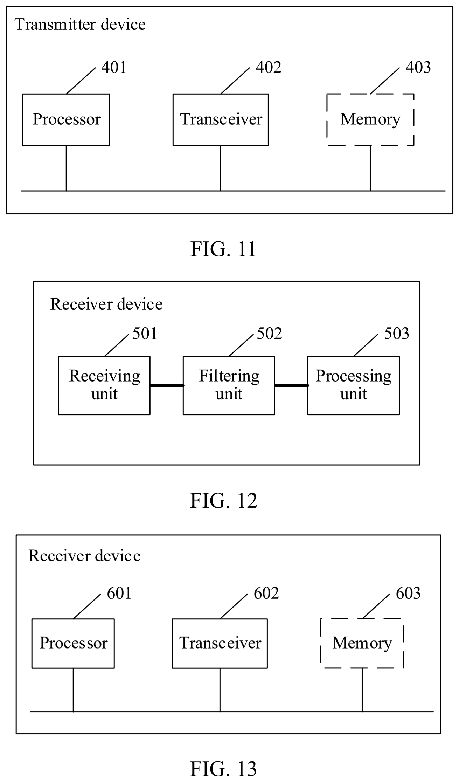

FIG. 11 is a diagram of another structure of a transmitter device according to an embodiment of this application. As shown in FIG. 11, the transmitter device includes a processor 401 and a transceiver 402. The processor 401 and the transceiver 402 are connected to each other through a line. Specifically, the transceiver 402 is configured to perform signal receiving and sending operations, and the processor 401 is configured to perform other operations than signal receiving and sending. In a possible implementation, the processor 401 may include the processing unit 301 shown in FIG. 10, and the transceiver 402 includes the sending unit 302 shown in FIG. 10. Optionally, the transmitter device may further include a memory 403, where the memory 403 is configured to store program instructions and data.

FIG. 12 is a diagram of a structure of a receiver device according to an embodiment of this application. As shown in FIG. 12, the receiver device includes a receiving unit 501, a filtering unit 502, and a processing unit 503. The receiving unit 501 is configured to perform the operation of step 201, the filtering unit 502 is configured to perform the operation of step 202, and the processing unit 503 is configured to perform the operation of step 203. It should be understood that the receiver device provided in this application may alternatively be implemented in another manner. For example, division into the units in the foregoing apparatus is merely logical function division and may be other division in actual implementation. For example, a plurality of units or components may be combined or integrated into another system. In addition, functional units in embodiments of this application may be integrated into one processing unit, may be independent physical units, or two or more functional units may be integrated into one processing unit. The integrated unit may be implemented in a form of hardware, or may be implemented in a form of a software functional unit.

FIG. 13 is a diagram of another structure of a receiver device according to an embodiment of this application. As shown in FIG. 13, the receiver device includes a processor 601 and a transceiver 602. The processor 601 and the transceiver 602 are connected to each other through a line. Specifically, the transceiver 602 is configured to perform signal receiving and sending operations, and the processor 601 is configured to perform other operations than signal receiving and sending. In a possible implementation, the processor 601 may include the filtering unit 502 and the processing unit 503 shown in FIG. 12, and the transceiver 602 includes the receiving unit 501 shown in FIG. 12. Optionally, the receiver device may further include a memory 603, where the memory 603 is configured to store program instructions and data.

An embodiment of this application further provides a chip. A circuit and one or more interfaces that are configured to implement a function of the processor 401 or the processor 601 are integrated into the chip. When a memory is integrated into the chip, the chip may complete the method steps in any one or more of the foregoing embodiments. When no memory is integrated into the chip, the chip may be connected to an external memory through an interface. The chip implements, based on program code stored in the external memory, actions performed by the transmitter device or the receiver device in the foregoing embodiments.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal processing method, comprising:

   obtaining a first modulated signal, wherein the first modulated signal comprises M symbol sets, each symbol set comprises N symbols, M is an integer greater than 1, and N is an integer greater than 1;
   inverting a polarity of at least one symbol in at least one symbol set to obtain a second modulated signal comprising $M \times N$ symbols, wherein power of the second modulated signal at a target frequency is less than power of the first modulated signal at the target frequency;
   generating identification information, wherein the identification information indicates polarity inversion statuses of the symbols in each symbol set; and
   sending the second modulated signal and the identification information.

2. The method according to claim 1, wherein inverting the polarity of the at least one symbol in the at least one symbol set comprises:
   inverting polarities of all symbols in the at least one symbol set.

3. The method according to claim 1 or 2, wherein inverting the polarity of the at least one symbol in the at least one symbol set comprises:

   if polarities of all symbols in a $q^{th}$ symbol set remain unchanged, determining a frequency characteristic parameter corresponding to each of a $0^{th}$ symbol set to the $q^{th}$ symbol set, and performing summation on frequency characteristic parameters corresponding to all of the $0^{th}$ symbol set to the $q^{th}$ symbol set and performing a modulo operation, to obtain a first summation value, wherein $0<q\leq M-1$, and the frequency characteristic parameter corresponding to each symbol set is related to the target frequency; or
   if polarities of all symbols in a $q^{th}$ symbol set are inverted, determining, based on the target frequency, a frequency characteristic parameter corresponding to each of a $0^{th}$ symbol set to the $q^{th}$ symbol set, and performing summation on frequency characteristic parameters corresponding to all of the $0^{th}$ symbol set to the $q^{th}$ symbol set and performing a modulo operation, to obtain a second summation value; and
   if a square of the first summation value is greater than a square of the second summation value, inverting the polarities of all the symbols in the $q^{th}$ symbol set; or
   if a square of the first summation value is less than or equal to a square of the second summation value, keeping the polarities of all the symbols in the $q^{th}$ symbol set unchanged.

4. The method according to claim 1 or 2, wherein the target frequency is 0, and a frequency characteristic parameter corresponding to the symbol set is a sum of values of all symbols in the symbol set.

5. The method according to claim 4, wherein the values of all the symbols in the symbol set are real numbers, and inverting the polarity of the at least one symbol in the at least one symbol set comprises:

   obtaining a third summation value obtained by performing summation on values of all symbols in a $0^{th}$ symbol set to a $(q-1)^{th}$ symbol set, and obtaining a fourth summation value obtained by performing summation on values of all symbols in a $q^{th}$ symbol set; and
   if polarities of the third summation value and the fourth summation value are the same, inverting polarities of all the symbols in the $q^{th}$ symbol set; or
   if polarities of the third summation value and the fourth summation value are different, keeping polarities of all the symbols in the $q^{th}$ symbol set unchanged.

6. The method according to claim 1 or 2, wherein the target frequency comprises a first frequency and a second frequency, a first frequency characteristic parameter corresponding to each symbol set is related to the first frequency, a second frequency characteristic parameter corresponding to each symbol set is related to the second frequency, and inverting the polarity of the at least one symbol in the at least one symbol set comprises:

   if polarities of all symbols in a $q^{th}$ symbol set remain unchanged, determining a first frequency characteristic parameter corresponding to each of a $0^{th}$ symbol set to the $q^{th}$ symbol set, performing summation on first frequency characteristic parameters corresponding to all of the $0^{th}$ symbol set to the $q^{th}$ symbol set and performing a modulo operation, to obtain a fifth summation value, determining a second frequency characteristic parameter corresponding to each of the $0^{th}$ symbol set to the $q^{th}$ symbol set, and performing summation on second frequency characteristic parameters corresponding to all of the $0^{th}$ symbol set to the $q^{th}$ symbol set and performing a modulo operation, to obtain a sixth summation value; or

if polarities of all symbols in a $q^{th}$ symbol set are inverted, determining a first frequency characteristic parameter corresponding to each of a $0^{th}$ symbol set to the $q^{th}$ symbol set, performing summation on first frequency characteristic parameters corresponding to all of the $0^{th}$ symbol set to the $q^{th}$ symbol set and performing a modulo operation, to obtain a seventh summation value, determining a second frequency characteristic parameter corresponding to each of the $0^{th}$ symbol set to the $q^{th}$ symbol set, and performing summation on second frequency characteristic parameters corresponding to all of the $0^{th}$ symbol set to the $q^{th}$ symbol set and performing a modulo operation, to obtain an eighth summation value; and

if a sum of a square of the fifth summation value and a square of the sixth summation value is greater than a sum of a square of the seventh summation value and a square of the eighth summation value, inverting the polarities of all the symbols in the $q^{th}$ symbol set; or

if a sum of a square of the fifth summation value and a square of the sixth summation value is less than or equal to a sum of a square of the seventh summation value and a square of the eighth summation value, keeping the polarities of all the symbols in the $q^{th}$ symbol set unchanged.

7. The method according to any one of claims 3 to 6, wherein the frequency characteristic parameter corresponding to the symbol set is represented as:

$$\sum_{s_j \in D_q} s_j \times e^{-i \times 2\pi \times \frac{f}{Baudrate} \times (j + (q-1) \times (N+P))}$$

wherein S represents a symbol in the symbol set, i represents an imaginary part of a complex number, j represents a sequence number of the symbol in the symbol set, f represents the target frequency, Baudrate represents a baud rate for transmitting the second modulated signal and the identification information, q represents a sequence number of the symbol set, N represents a quantity of symbols in the symbol set, P represents a length of identification information corresponding to the symbol set, and Dq represents all the symbols in the $q^{th}$ symbol set.

8. The method according to any one of claims 2 to 7, wherein the identification information comprises M sub-identifiers that are in one-to-one correspondence with the M symbol sets, a first value of the sub-identifier indicates that polarities of all symbols in a corresponding symbol set are inverted, and a second value of the sub-identifier indicates that the polarities of all the symbols in the corresponding symbol set remain unchanged.

9. The method according to claim 1, wherein each symbol set comprises V symbol subsets, each symbol subset comprises a plurality of symbols, V is an integer greater than 1, and inverting the polarity of the at least one symbol in the at least one symbol set comprises:
inverting polarities of all symbols in at least one symbol subset in the at least one symbol set.

10. The method according to claim 9, wherein inverting the polarity of the at least one symbol in the at least one symbol set comprises:

if polarities of all symbols in an $h^{th}$ symbol subset in a $q^{th}$ symbol set remain unchanged, determining a frequency characteristic parameter corresponding to an $h^{th}$ symbol subset in each of a $0^{th}$ symbol set to the $q^{th}$ symbol set, and performing summation on frequency characteristic parameters corresponding to $h^{th}$ symbol subsets in all of the $0^{th}$ symbol set to the $q^{th}$ symbol set and performing a modulo operation, to obtain a ninth summation value, wherein $0 \leq h \leq V-1$, and a frequency characteristic parameter corresponding to each symbol subset is related to the target frequency; or

if polarities of all symbols in an $h^{th}$ symbol subset in a $q^{th}$ symbol set are inverted, determining a frequency characteristic parameter corresponding to an $h^{th}$ symbol subset in each of a $0^{th}$ symbol set to the $q^{th}$ symbol set, and performing summation on frequency characteristic parameters corresponding to $h^{th}$ symbol subsets in all of the $0^{th}$ symbol set to the $q^{th}$ symbol set and performing a modulo operation, to obtain a tenth summation value; and

if a square of the ninth summation value is greater than a square of the tenth summation value, inverting the polarities of all the symbols in the $h^{th}$ symbol subset in the $q^{th}$ symbol set; or

if a square of the ninth summation value is less than or equal to a square of the tenth summation value, keeping the polarities of all the symbols in the h$^{th}$ symbol subset in the q$^{th}$ symbol set unchanged.

11. The method according to claim 10, wherein the frequency characteristic parameter corresponding to the symbol subset is represented as:

$$\sum_{s_j \in U_h} s_j \times e^{-i \times 2\pi \times \frac{f}{Baudrate} \times (j + (q-1) \times (N+P))}$$

wherein S represents a symbol in the symbol set, i represents an imaginary part of a complex number, j represents a sequence number of the symbol in the symbol set, f represents the target frequency, Baudrate represents a baud rate for transmitting the second modulated signal and the identification information, q represents a sequence number of the symbol set, N represents a quantity of symbols in the symbol set, P represents a length of identification information corresponding to the symbol set, and $U_h$ represents the h$^{th}$ symbol subset in the q$^{th}$ symbol set.

12. The method according to any one of claims 9 to 11, wherein the identification information comprises M sub-identifiers that are in one-to-one correspondence with the M symbol sets, and the sub-identifier indicates whether symbol polarity inversion is performed on each symbol subset in a corresponding symbol set.

13. The method according to claim 1, wherein inverting the polarity of the at least one symbol in the at least one symbol set comprises:

    performing polarity inversion on a symbol in each symbol set separately in K manners, to obtain K symbol sets, wherein K is an integer greater than 1;
    obtaining K frequency characteristic parameters respectively corresponding to the K symbol sets obtained through the polarity inversion, wherein the K frequency characteristic parameters are all related to the target frequency; and
    determining a symbol set corresponding to a frequency characteristic parameter whose modulus value is the smallest in the K frequency characteristic parameters.

14. The method according to claim 13, wherein a frequency characteristic parameter corresponding to any one of the K symbol sets obtained through the polarity inversion is represented as:

$$\sum_{s_j \in C_{D_q} U_k} s_j \times e^{-i \times 2\pi \times \frac{f}{Baudrate} \times (j + (q-1) \times (N+P))} - \sum_{s_j \in U_k} s_j \times e^{-i \times 2\pi \times \frac{f}{Baudrate} \times (j + (q-1) \times (N+P))}$$

wherein S represents a symbol in the symbol set, i represents an imaginary part of a complex number, j represents a sequence number of the symbol in the symbol set, f represents the target frequency, Baudrate represents a baud rate for transmitting the second modulated signal and the identification information, q represents a sequence number of the symbol set, $D_q$ represents a q$^{th}$ symbol set, N represents a quantity of symbols in the symbol set, P represents a length of identification information corresponding to the symbol set, $U_k$ represents a symbol whose polarity is inverted in the q$^{th}$ symbol set, and $C_{D_q} U_k$ represents a symbol whose polarity remains unchanged in the q$^{th}$ symbol set.

15. The method according to claim 13 or 14, wherein the identification information comprises M sub-identifiers that are in one-to-one correspondence with the M symbol sets, and the sub-identifier indicates a symbol polarity inversion manner used for a corresponding symbol set.

16. The method according to any one of claims 1 to 15, wherein the identification information comprises the M sub-identifiers interleaved in the M symbol sets, and the M sub-identifiers are in one-to-one correspondence with the M symbol sets.

17. The method according to any one of claims 1 to 16, wherein after generating the identification information, the method further comprises:
    performing forward error correction FEC encoding on the identification information.

18. A signal processing method, comprising:

receiving a first signal and identification information that are sent by a transmitter through a channel;

filtering out a partial signal at a target frequency in the first signal to obtain a second signal, wherein the second signal comprises M symbol sets, each symbol set comprises N symbols, M is an integer greater than 1, N is an integer greater than 1, and the identification information indicates polarity inversion statuses of the symbols in each symbol set; and

inverting a polarity of at least one symbol in at least one symbol set based on the identification information to obtain a third signal comprising $M \times N$ symbols.

19. The method according to claim 18, wherein the identification information comprises M sub-identifiers interleaved in the M symbol sets, and the M sub-identifiers are in one-to-one correspondence with the M symbol sets.

20. A chip, wherein the chip comprises a processor and a memory, the memory and the processor are connected to each other through a line, the memory stores instructions, and the processor is configured to perform the method according to any one of claims 1 to 19.

21. A transmitter device, comprising a processing unit and a sending unit, wherein

the processing unit is configured to: obtain a first modulated signal, wherein the first modulated signal comprises M symbol sets, each symbol set comprises N symbols, M is an integer greater than 1, and N is an integer greater than 1;

invert a polarity of at least one symbol in at least one symbol set to obtain a second modulated signal comprising $M \times N$ symbols, wherein power of the second modulated signal at a target frequency is less than power of the first modulated signal at the target frequency; and

generate identification information, wherein the identification information indicates polarity inversion statuses of the symbols in each symbol set; and

the sending unit is configured to send the second modulated signal and the identification information.

22. The transmitter device according to claim 21, wherein the processing unit is specifically configured to: invert polarities of all symbols in the at least one symbol set.

23. The transmitter device according to claim 21 or 22, wherein the processing unit is specifically configured to:

if polarities of all symbols in a $q^{th}$ symbol set remain unchanged, determine a frequency characteristic parameter corresponding to each of a $0^{th}$ symbol set to the $q^{th}$ symbol set, and perform summation on frequency characteristic parameters corresponding to all of the $0^{th}$ symbol set to the $q^{th}$ symbol set and perform a modulo operation, to obtain a first summation value, wherein $0 < q \leq M-1$, and the frequency characteristic parameter corresponding to each symbol set is related to the target frequency; or

if polarities of all symbols in a $q^{th}$ symbol set are inverted, determine, based on the target frequency, a frequency characteristic parameter corresponding to each of a $0^{th}$ symbol set to the $q^{th}$ symbol set, and perform summation on frequency characteristic parameters corresponding to all of the $0^{th}$ symbol set to the $q^{th}$ symbol set and perform a modulo operation, to obtain a second summation value; and

if a square of the first summation value is greater than a square of the second summation value, invert the polarities of all the symbols in the $q^{th}$ symbol set; or

if a square of the first summation value is less than or equal to a square of the second summation value, keep the polarities of all the symbols in the $q^{th}$ symbol set unchanged.

24. The transmitter device according to claim 21 or 22, wherein the target frequency is 0, and a frequency characteristic parameter corresponding to the symbol set is a sum of values of all symbols in the symbol set.

25. The transmitter device according to claim 24, wherein the values of all the symbols in the symbol set are real numbers, and the processing unit is specifically configured to:

obtain a third summation value obtained by performing summation on values of all symbols in a $0^{th}$ symbol set to a $(q-1)^{th}$ symbol set, and obtain a fourth summation value obtained by performing summation on values of all symbols in a $q^{th}$ symbol set; and

if polarities of the third summation value and the fourth summation value are the same, invert polarities of all the symbols in the q<sup>th</sup> symbol set; or

if polarities of the third summation value and the fourth summation value are different, keep polarities of all the symbols in the q<sup>th</sup> symbol set unchanged.

26. The transmitter device according to claim 21 or 22, wherein the target frequency comprises a first frequency and a second frequency, a first frequency characteristic parameter corresponding to each symbol set is related to the first frequency, a second frequency characteristic parameter corresponding to each symbol set is related to the second frequency, and the processing unit is specifically configured to:

if polarities of all symbols in a q<sup>th</sup> symbol set remain unchanged, determine a first frequency characteristic parameter corresponding to each of a 0<sup>th</sup> symbol set to the q<sup>th</sup> symbol set, perform summation on first frequency characteristic parameters corresponding to all of the 0<sup>th</sup> symbol set to the q<sup>th</sup> symbol set and perform a modulo operation, to obtain a fifth summation value, determine a second frequency characteristic parameter corresponding to each of the 0<sup>th</sup> symbol set to the q<sup>th</sup> symbol set, and perform summation on second frequency characteristic parameters corresponding to all of the 0<sup>th</sup> symbol set to the q<sup>th</sup> symbol set and perform a modulo operation, to obtain a sixth summation value; or

if polarities of all symbols in a q<sup>th</sup> symbol set are inverted, determine a first frequency characteristic parameter corresponding to each of a 0<sup>th</sup> symbol set to the q<sup>th</sup> symbol set, perform summation on first frequency characteristic parameters corresponding to all of the 0<sup>th</sup> symbol set to the q<sup>th</sup> symbol set and perform a modulo operation, to obtain a seventh summation value, determine a second frequency characteristic parameter corresponding to each of the 0<sup>th</sup> symbol set to the q<sup>th</sup> symbol set, and perform summation on second frequency characteristic parameters corresponding to all of the 0<sup>th</sup> symbol set to the q<sup>th</sup> symbol set and perform a modulo operation, to obtain an eighth summation value; and

if a sum of a square of the fifth summation value and a square of the sixth summation value is greater than a sum of a square of the seventh summation value and a square of the eighth summation value, invert the polarities of all the symbols in the q<sup>th</sup> symbol set; or

if a sum of a square of the fifth summation value and a square of the sixth summation value is less than or equal to a sum of a square of the seventh summation value and a square of the eighth summation value, keep the polarities of all the symbols in the q<sup>th</sup> symbol set unchanged.

27. The transmitter device according to any one of claims 23 to 26, wherein the frequency characteristic parameter corresponding to the symbol set is represented as:

$$\sum_{s_j \in D_q} s_j \times e^{-i \times 2\pi \times \frac{f}{Baudrate} \times (j+(q-1)\times(N+P))}$$

wherein S represents a symbol in the symbol set, i represents an imaginary part of a complex number, j represents a sequence number of the symbol in the symbol set, f represents the target frequency, Baudrate represents a baud rate for transmitting the second modulated signal and the identification information, q represents a sequence number of the symbol set, N represents a quantity of symbols in the symbol set, P represents a length of identification information corresponding to the symbol set, and Dq represents all the symbols in the q<sup>th</sup> symbol set.

28. The transmitter device according to any one of claims 22 to 27, wherein the identification information comprises M sub-identifiers that are in one-to-one correspondence with the M symbol sets, a first value of the sub-identifier indicates that polarities of all symbols in a corresponding symbol set are inverted, and a second value of the sub-identifier indicates that the polarities of all the symbols in the corresponding symbol set remain unchanged.

29. The transmitter device according to claim 21, wherein each symbol set comprises V symbol subsets, each symbol subset comprises a plurality of symbols, V is an integer greater than 1, and the processing unit is specifically configured to:
invert polarities of all symbols in at least one symbol subset in the at least one symbol set.

30. The transmitter device according to claim 29, wherein the processing unit is specifically configured to:

if polarities of all symbols in an h<sup>th</sup> symbol subset in a q<sup>th</sup> symbol set remain unchanged, determine a frequency characteristic parameter corresponding to an h<sup>th</sup> symbol subset in each of a 0<sup>th</sup> symbol set to the q<sup>th</sup> symbol set,

and perform summation on frequency characteristic parameters corresponding to $h^{th}$ symbol subsets in all of the $0^{th}$ symbol set to the $q^{th}$ symbol set and perform a modulo operation, to obtain a ninth summation value, wherein $0 \leq h \leq V-1$, and a frequency characteristic parameter corresponding to each symbol subset is related to the target frequency; or

if polarities of all symbols in an $h^{th}$ symbol subset in a $q^{th}$ symbol set are inverted, determine a frequency characteristic parameter corresponding to an $h^{th}$ symbol subset in each of a $0^{th}$ symbol set to the $q^{th}$ symbol set, and perform summation on frequency characteristic parameters corresponding to $h^{th}$ symbol subsets in all of the $0^{th}$ symbol set to the $q^{th}$ symbol set and perform a modulo operation, to obtain a tenth summation value; and

if a square of the ninth summation value is greater than a square of the tenth summation value, invert the polarities of all the symbols in the $h^{th}$ symbol subset in the $q^{th}$ symbol set; or

if a square of the ninth summation value is less than or equal to a square of the tenth summation value, keep the polarities of all the symbols in the $h^{th}$ symbol subset in the $q^{th}$ symbol set unchanged.

31. The transmitter device according to claim 30, wherein the frequency characteristic parameter corresponding to the symbol subset is represented as:

$$\sum_{s_j \in U_h} S_j \times e^{-i \times 2\pi \times \frac{f}{Baudrate} \times (j + (q-1) \times (N+P))}$$

wherein S represents a symbol in the symbol set, i represents an imaginary part of a complex number, j represents a sequence number of the symbol in the symbol set, f represents the target frequency, Baudrate represents a baud rate for transmitting the second modulated signal and the identification information, q represents a sequence number of the symbol set, N represents a quantity of symbols in the symbol set, P represents a length of identification information corresponding to the symbol set, and $U_h$ represents the $h^{th}$ symbol subset in the $q^{th}$ symbol set.

32. The transmitter device according to any one of claims 29 to 31, wherein the identification information comprises M sub-identifiers that are in one-to-one correspondence with the M symbol sets, and the sub-identifier indicates whether symbol polarity inversion is performed on each symbol subset in a corresponding symbol set.

33. The transmitter device according to claim 21, wherein the processing unit is specifically configured to:

separately perform polarity inversion on a symbol in each symbol set in K manners, to obtain K symbol sets, wherein K is an integer greater than 1;

obtain K frequency characteristic parameters respectively corresponding to the K symbol sets obtained through the polarity inversion, wherein the K frequency characteristic parameters are all related to the target frequency; and

determine a symbol set corresponding to a frequency characteristic parameter whose modulus value is the smallest in the K frequency characteristic parameters.

34. The transmitter device according to claim 33, wherein a frequency characteristic parameter corresponding to any one of the K symbol sets obtained through the polarity inversion is represented as:

$$\sum_{s_j \in C_{D_q} U_k} S_j \times e^{-i \times 2\pi \times \frac{f}{Baudrate} \times (j + (q-1) \times (N+P))} - \sum_{s_j \in U_k} S_j \times e^{-i \times 2\pi \times \frac{f}{Baudrate} \times (j + (q-1) \times (N+P))}$$

wherein S represents a symbol in the symbol set, i represents an imaginary part of a complex number, j represents a sequence number of the symbol in the symbol set, f represents the target frequency, Baudrate represents a baud rate for transmitting the second modulated signal and the identification information, q represents a sequence number of the symbol set, $D_q$ represents a $q^{th}$ symbol set, N represents a quantity of symbols in the symbol set, P represents a length of identification information corresponding to the symbol set, $U_k$ represents a symbol whose polarity is inverted in the $q^{th}$ symbol set, and $C_{D_q} U_k$ represents a symbol whose polarity remains unchanged in the $q^{th}$ symbol set.

35. The transmitter device according to claim 33 or 34, wherein the identification information comprises M sub-identifiers that are in one-to-one correspondence with the M symbol sets, and the sub-identifier indicates a symbol polarity inversion manner used for a corresponding symbol set.

36. The transmitter device according to any one of claims 21 to 35, wherein the identification information comprises the M sub-identifiers interleaved in the M symbol sets, and the M sub-identifiers are in one-to-one correspondence with the M symbol sets.

37. The transmitter device according to any one of claims 21 to 36, wherein the processing unit is further configured to: perform forward error correction FEC encoding on the identification information.

38. A receiver device, comprising a receiving unit, a filtering unit, and a processing unit, wherein

the receiving unit is configured to receive a first signal and identification information that are sent by a transmitter through a channel;
the filtering unit is configured to filter out a partial signal at a target frequency in the first signal to obtain a second signal, wherein the second signal comprises M symbol sets, each symbol set comprises N symbols, M is an integer greater than 1, N is an integer greater than 1, and the identification information indicates polarity inversion statuses of the symbols in each symbol set; and
the processing unit is configured to invert a polarity of at least one symbol in at least one symbol set based on the identification information to obtain a third signal comprising $M \times N$ symbols.

39. The receiver device according to claim 38, wherein the identification information comprises M sub-identifiers interleaved in the M symbol sets, and the M sub-identifiers are in one-to-one correspondence with the M symbol sets.

40. A communication system, comprising the transmitter device according to any one of claims 21 to 37 and the receiver device according to claim 38 or 39.

```
  ┌──────────┐     ┌──────────┐     ┌──────────────┐          ┌──────────┐
──┤  Source  ├────▶│   FEC    ├────▶│ Transmitter  ├─────────▶│          │
  │          │     │ encoder  │     │     DSP      │          │          │
  └──────────┘     └──────────┘     │  processor   │          │          │
                                    └──────────────┘          │          │
                                                              │ Channel  │
  ┌──────────┐     ┌──────────┐     ┌──────────────┐          │          │
◀─┤  Sink    │◀────┤   FEC    │◀────┤   Receiver   │◀─────────┤          │
  │          │     │ decoder  │     │     DSP      │          │          │
  └──────────┘     └──────────┘     │  processor   │          └──────────┘
                                    └──────────────┘
```

FIG. 1

```
┌───────────────────────────────────────────────────────┐   101
│          Obtain a first modulated signal              ├──╱
└───────────────────────────────────────────────────────┘
                          │
                          ▼
┌───────────────────────────────────────────────────────┐   102
│ Perform power spectrum shaping on the first modulated  ├──╱
│  signal based on a target frequency to obtain a second │
│                 modulated signal                       │
└───────────────────────────────────────────────────────┘
                          │
                          ▼
┌───────────────────────────────────────────────────────┐   103
│          Generate identification information          ├──╱
└───────────────────────────────────────────────────────┘
                          │
                          ▼
┌───────────────────────────────────────────────────────┐   104
│ Send the second modulated signal and the identification├──╱
│                   information                          │
└───────────────────────────────────────────────────────┘
```

FIG. 2

FIG. 3

FIG. 4

FIG. 5

FIG. 6

| Indicator bit 0 | Symbol set 0 | Indicator bit 1 | Symbol set 1 | ... | Indicator bit (M–1) | Symbol set (M–1) |
|---|---|---|---|---|---|---|

FIG. 7A

| Symbol set 0 | Indicator bit 0 | Symbol set 1 | Indicator bit 1 | ... | Symbol set (M–1) | Indicator bit (M–1) |
|---|---|---|---|---|---|---|

FIG. 7B

Receive a first signal and identification information that are sent by a transmitter through a channel /201

Filter out a partial signal at a target frequency in the first signal to obtain a second signal /202

Invert a polarity of at least one symbol in at least one symbol set based on the identification information to obtain a third signal /203

FIG. 8

Interference

Interference

Filtering

Signal

Signal

FIG. 9

Transmitter device

/301

/302

Processing unit

Sending unit

FIG. 10

Transmitter device

401
Processor

402
Transceiver

403
Memory

FIG. 11

Receiver device

501
Receiving unit

502
Filtering unit

503
Processing unit

FIG. 12

Receiver device

601
Processor

602
Transceiver

603
Memory

FIG. 13

## INTERNATIONAL SEARCH REPORT

| International application No. |
|---|
| **PCT/CN2024/103544** |

**A.  CLASSIFICATION OF SUBJECT MATTER**

H04L 1/00(2006.01)i

According to International Patent Classification (IPC) or to both national classification and IPC

**B.  FIELDS SEARCHED**

Minimum documentation searched (classification system followed by classification symbols)

IPC: H04L: G06F

Documentation searched other than minimum documentation to the extent that such documents are included in the fields searched

Electronic data base consulted during the international search (name of data base and, where practicable, search terms used)

CNKI: CNTXT; ENTXTC; DWPI; IEEE: 调制, 符号, 翻转, 反转, 极性, 功率, 小于, 干扰, 标识, 指示, 频率, modulat+, symbol, reverse, polar+, power, less, interference, identif+, indicat+, frequency

**C.  DOCUMENTS CONSIDERED TO BE RELEVANT**

| Category* | Citation of document, with indication, where appropriate, of the relevant passages | Relevant to claim No. |
|---|---|---|
| A | CN 102611664 A (HUAWEI TECHNOLOGIES CO., LTD.) 25 July 2012 (2012-07-25) claim 1, and description, paragraphs 6-15 | 1-40 |
| A | US 2004156444 A1 (NAKACHE, Y. P. et al.) 12 August 2004 (2004-08-12) entire document | 1-40 |
| A | US 2015281874 A1 (SHENZHEN HUIDING TECHNOLOGY CO., LTD.) 01 October 2015 (2015-10-01) entire document | 1-40 |
| A | US 2016226594 A1 (THE UNIVERSITY COURT OF THE UNIVERSITY OF EDINBURGH) 04 August 2016 (2016-08-04) entire document | 1-40 |
| A | US 2019222348 A1 (SHANGHAI LANGBO COMMUNICATION TECHNOLOGY CO., LTD.) 18 July 2019 (2019-07-18) entire document | 1-40 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 September 2024** | **13 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/103544**

| Patent document cited in search report | | | Publication date (day/month/year) | Patent family member(s) | | | Publication date (day/month/year) |
|---|---|---|---|---|---|---|---|
| CN | 102611664 | A | 25 July 2012 | WO | 2012097608 | A1 | 26 July 2012 |
| | | | | EP | 2654259 | A1 | 23 October 2013 |
| | | | | US | 2013308726 | A1 | 21 November 2013 |
| US | 2004156444 | A1 | 12 August 2004 | DE | 602004022489 | D1 | 24 September 2009 |
| | | | | WO | 2004071039 | A1 | 19 August 2004 |
| | | | | JP | 2006517373 | A | 20 July 2006 |
| | | | | EP | 1500240 | A1 | 26 January 2005 |
| | | | | CN | 1698331 | A | 16 November 2005 |
| US | 2015281874 | A1 | 01 October 2015 | WO | 2015100888 | A1 | 09 July 2015 |
| | | | | CN | 103701508 | A | 02 April 2014 |
| | | | | CN | 106454696 | A | 22 February 2017 |
| US | 2016226594 | A1 | 04 August 2016 | EP | 3044889 | A1 | 20 July 2016 |
| | | | | JP | 2016532405 | A | 13 October 2016 |
| | | | | GB | 2518215 | A | 18 March 2015 |
| | | | | WO | 2015036786 | A1 | 19 March 2015 |
| | | | | CN | 105723634 | A | 29 June 2016 |
| US | 2019222348 | A1 | 18 July 2019 | US | 2024171431 | A1 | 23 May 2024 |
| | | | | US | 2023124647 | A1 | 20 April 2023 |
| | | | | US | 2020403725 | A1 | 24 December 2020 |
| | | | | WO | 2018054155 | A1 | 29 March 2018 |
| | | | | CN | 107872865 | A | 03 April 2018 |
| | | | | CN | 109618402 | A | 12 April 2019 |

Form PCT/ISA/210 (patent family annex) (July 2022)

**REFERENCES CITED IN THE DESCRIPTION**

**Patent documents cited in the description**

- CN 202311035417